# EUROPEAN PATENT APPLICATION

(11) **EP 4 537 715 A1**
(43) Date of publication of application: **16.04.2025**
(21) Application number: 23203576.6
(22) Date of filing: 13.10.2023
(51) Int. Cl.: A47J 31/44

(54) **KITCHEN STEAM DELIVERY ASSEMBLY, BEVERAGE MACHINE AND SLEEVE MEMBER FOR RECEIVING A STEAM NOZZLE**

(71) Applicant: Versuni Holding B.V., 5656 AE Eindhoven (NL)
(72) Inventor: VAN DER VEEN, Bram, 5656 AE Eindhoven (NL)
(74) Representative: Vollering, Stefanus Franciscus Maria

(57) **Abstract**

Provided is a kitchen steam delivery assembly (100). The kitchen steam delivery assembly comprises a steam nozzle assembly (102). The steam nozzle assembly includes a steam nozzle (104) that delimits at least one orifice (106) for releasing steam. The kitchen steam delivery assembly also comprises a sleeve member (108) in which the steam nozzle is at least partially receivable. The sleeve member and at least part (110) of the steam nozzle assembly are rotatable relative to each other when the steam nozzle is received in the sleeve member. A push-fit connection (112, 114) secures the steam nozzle assembly and the sleeve member to each other when the steam nozzle is received in the sleeve member. The at least part of the steam nozzle assembly comprises a first surface (116) and the sleeve member comprises a second surface (118) for facing and contacting the first surface when the steam nozzle is received in the sleeve member. At least one of the first and second surfaces is a multilevel surface whose levels define axial displacement of the sleeve member along the steam nozzle via contact between the first and second surfaces during said rotation of the sleeve member and the at least part of the steam nozzle assembly relative to each other. Also provided is a beverage machine (107) comprising the kitchen steam delivery assembly. Further provided is a sleeve member for receiving the steam nozzle of a steam nozzle assembly.

## Description

### FIELD OF THE INVENTION

The invention relates to a kitchen steam delivery assembly, for example a kitchen steam delivery assembly for frothing milk, and a beverage machine comprising such a kitchen steam delivery assembly. The invention further relates to a sleeve member, e.g. a panarello, for receiving a steam nozzle.

### BACKGROUND OF THE INVENTION

Many kitchen steam delivery assemblies, e.g. milk frothers, use steam that is produced by, for example, a thermoblock. This steam may be supplied to a steam nozzle equipped with a sleeve member that fits over the steam nozzle.

Notable examples of such a sleeve member are a steam wand and a panarello. The steam wand may be used by placing it in a cup that is filled with milk. Steam released from the steam nozzle may be used to heat the milk, and optionally to froth the milk. In case of a panarello, an air inlet may be defined in the sleeve member to admit air into the sleeve member's interior. The air and steam released from the steam nozzle may be used to froth the milk in the cup.

A steam wand and/or panarello is included in many coffee machines to froth milk. These components tend to be detachable. Parts that are exposed to milk can be pulled off, and cleaned, e.g. in a dishwasher, in order to maintain hygiene and retain the steam wand's or panarello's functionality. Especially in case of a panarello, such cleaning may reduce the risk of the panarello's air inlet becoming blocked, and thus assist to maintain proper functioning of the panarello.

### SUMMARY OF THE INVENTION

Challenges have been encountered in terms of combining secure attachment of such a sleeve member during use that involves delivery of steam through the sleeve with easy detachment and attachment of the sleeve member, e.g. for cleaning. In particular, detachment of the sleeve member can be more inconvenient when the sleeve member is relatively securely attached.

The invention is defined by the claims.

According to examples in accordance with an aspect of the invention, there is provided a kitchen steam delivery assembly comprising: a steam nozzle assembly comprising a steam nozzle that has at least one orifice for releasing steam; a sleeve member in which the steam nozzle is at least partially receivable, the sleeve member and at least part of the steam nozzle assembly being rotatable relative to each other when the steam nozzle is received in the sleeve member; a push-fit connection for securing the steam nozzle assembly and the sleeve member to each other when the steam nozzle is received in the sleeve member, wherein: the at least part of the steam nozzle assembly comprises a first surface and the sleeve member comprises a second surface for facing and contacting the first surface when the steam nozzle is received in the sleeve member, and at least one of the first and second surfaces is a multilevel surface whose levels define axial displacement of the sleeve member along the steam nozzle via contact between the first and second surfaces during said rotation of the sleeve member and the at least part of the steam nozzle assembly relative to each other.

Whilst the push-fit connection provides a relatively straightforward and intuitive way of securing the steam nozzle assembly and the sleeve member to each other via pushing the sleeve member in a first axial direction along the steam nozzle, challenges have nonetheless been encountered relating to pulling the sleeve member in a second axial direction opposite the first axial direction.

The push-fit connection may be required to exert a suitable force for maintaining attachment of the sleeve member and the steam nozzle assembly during steam delivery using the kitchen steam delivery assembly.

In some embodiments, the push-fit connection may be configured so that at least 20 N of force is required for axially pulling the sleeve member along the steam nozzle to release the sleeve member from the steam nozzle assembly.

This may make it difficult for the user to pull the sleeve member in the second axial direction when they wish to release/detach the sleeve member from the steam nozzle assembly, e.g. for cleaning, or adjust how far along the steam nozzle the sleeve member is arranged.

For example, a greater force required to pull the sleeve member in the second axial direction may increase the risk of the sleeve member and/or the user's hand being thrust into an object, such as a drip tray, situated beneath the steam nozzle assembly at the moment the push-fit connection releases the sleeve member from the steam nozzle assembly.

Accordingly, the sleeve member and at least part of the steam nozzle assembly are rotatable relative to each other, with the at least part of the steam nozzle assembly comprising a first surface for facing and contacting a second surface of the sleeve member when the steam nozzle is received in the sleeve member. At least one of the first and second surfaces is a multilevel surface whose levels define axial displacement of the sleeve member along the steam nozzle via contact between the first and second surfaces during the rotation of the sleeve member and the at least part of the steam nozzle assembly relative to each other.

Rotating the sleeve member and the at least part of the steam nozzle assembly relative to each other and allowing the sleeve member to be moved via the multilevel surface along the steam nozzle in the second axial direction may represent an easier and more controlled way of moving the sleeve member along the steam nozzle in the second axial direction. The above-mentioned risk of thrusting the sleeve member and/or the user's hand into an object situated beneath the steam nozzle assembly may be lessened or removed.

A rotary motion can create a resultant axial force far exceeding the push-fit force, e.g. 20 N, that maintains attachment of the sleeve member to the steam nozzle assembly, with relatively little effort from the user.

This rotation may be considered more natural than a linear or translatory motion, e.g. due to being perceived as a smaller motion with a more defined beginning and end. The rotary motion may be implemented from the user's wrist and may require only one hand. For example, two of the user's digits, e.g. an index finger and a thumb, may enable the sleeve member to be detached from the steam nozzle assembly.

In some embodiments, the push-fit connection is releasable in response to a threshold extent of rotation of the sleeve member and the at least part of the steam nozzle assembly relative to each other and/or a threshold axial displacement of the sleeve member along the steam nozzle being reached. Thus, the push-fit connection and the multilevel surface(s) may create a "removal point" at which the sleeve member is detached from the steam nozzle assembly.

Such a removal point may be at any arbitrary extent of rotation, for example at 45 degrees, 90 degrees, etc. of rotation of the sleeve member and the at least part of the steam nozzle assembly relative to each other.

It is noted, more generally, that the sleeve member can still be detached by pulling in the second axial direction, e.g. downwardly.

In other words, the kitchen steam delivery assembly may provide at least two options for detaching the sleeve member: rotating the sleeve member and the at least part of the steam nozzle assembly relative to each other; and pulling the sleeve member in the second axial direction.

In some embodiments, the push-fit connection is configured to maintain a force for securing the steam nozzle assembly and the sleeve member to each other during at least a portion of said axial displacement of the sleeve member along the steam nozzle. Thus, the multilevel surface may be employed to adjust height of the sleeve member while the sleeve member and the steam nozzle assembly remain push-fitted to each other. For instance, the push-fit connection may maintain a 20 N force that secures the sleeve member to the steam nozzle assembly during the height adjustment.

In some embodiments, the levels of the multilevel surface(s) are arranged so that extents of the rotation of the sleeve member and the at least part of the steam nozzle assembly relative to each other define indexed axial displacements of the sleeve member along the steam nozzle in the second axial direction.

For example, a 45 degrees rotation may displace the sleeve member to a first distance along the steam nozzle, a 90 degrees rotation may displace the sleeve member to a second distance along the steam nozzle that is greater than the first distance, and a 135 degrees rotation may displace the sleeve member to a third distance along the steam nozzle that is greater than the second distance.

In such an example, a 180 degrees rotation may, for instance, correspond to the removal point at which the sleeve member is detached from the steam nozzle assembly.

The steam nozzle assembly may comprise a moveable element that is moveable relative to a remainder of the steam nozzle assembly to urge displacement of the sleeve member along the steam nozzle in the second axial direction. The moveable element may, for example, be included in the at least part of the steam nozzle assembly that includes the first surface.

For example, part of the steam nozzle assembly may be moved, e.g. rotated, thereby pushing a non-rotating sleeve member in the second axial direction, e.g. to detach the sleeve member from the steam nozzle assembly.

In alternative embodiments, the relative rotation may be via rotation of the sleeve member, e.g. about a longitudinal axis extending lengthways through the sleeve member, while the steam nozzle assembly remains static.

In some embodiments, the first surface is a multilevel surface that slopes from a lowermost level at a first side of the steam nozzle assembly to an uppermost level at a second side of the steam nozzle assembly opposite the first side.

Such a multilevel surface may be regarded as a diagonal line. Such a diagonal line may mean that twisting of the sleeve member about its longitudinal axis causes displacement, and thus separation, of the sleeve member in the second axial direction.

The angle of the sloping multilevel surface, in other words the diagonal twisting line, may be selected to optimize force versus speed of removal, thereby optimizing usability. This angle can be regarded as being a push-off angle.

Alternatively or additionally, the second surface may be a multilevel surface that slopes from a lowermost level at a first side of the sleeve member to an uppermost level at a second side of the sleeve member opposite the first side.

In some embodiments, the sleeve member and the at least part of the steam nozzle assembly are rotatable relative to each other to enable axial displacement of the sleeve member between an upper position in which the uppermost level of the sleeve member contacts the uppermost level of part of the steam nozzle and a lower position in which the uppermost level of the sleeve member contacts the lowermost level of the part of the steam nozzle assembly.

Whilst only one of the first and second surfaces may provide the multilevel surface that assists displacement of the sleeve member along the steam nozzle in the second axial direction, preferably the first surface is a first multilevel surface and the second surface is a second multilevel surface whose shape complements that of the first multilevel surface.

Such complementarily shaped multilevel surfaces may avoid the levels causing gaps to be provided between the first and second surfaces when the sleeve member is maximally advanced in the first axial direction along the steam nozzle.

In some embodiments, the levels comprise a main level and a protruding level that protrudes relative to the main level. This may provide, for example, a push-off geometry in which the protruding level protrudes far enough from the main level to cause an axial displacement of the sleeve member that releases the sleeve member from the steam nozzle assembly.

In some embodiments, the sleeve member delimits at least one air inlet for admitting air into the sleeve member's interior so that said air is combinable with said steam released via the at least one orifice. The air inlet(s) may, for example, assist frothing of a liquid, e.g. milk.

In some embodiments, the kitchen steam delivery assembly comprises a steam supply system for supplying steam to the steam nozzle. Such a steam supply system, e.g. comprising a steam generator for vaporizing water supplied thereto, may supply the steam that is carried along the steam nozzle and is released via the steam nozzle's orifice(s).

According to another aspect there is provided a beverage machine comprising the kitchen steam delivery assembly according to any of the embodiments described herein.

Such a beverage machine may, for example, include, in addition to the kitchen steam delivery assembly, a preparation chamber in which water, e.g. hot water, may be combined with a raw material, e.g. food ingredients, such as ground coffee.

In some embodiments, the beverage machine comprises a coffee brewing apparatus. In such embodiments, frothed liquid, e.g. milk, prepared using the kitchen steam delivery assembly may be combined with coffee brewed by the coffee brewing apparatus in a coffee beverage produced by the beverage machine.

According to yet another aspect there is provided a sleeve member for receiving a steam nozzle of a kitchen steam nozzle assembly, the sleeve member having a push-fit portion for enabling the sleeve member to be push-fitted to the steam nozzle assembly when the steam nozzle is received in the sleeve member, the sleeve member being rotatable relative to the steam nozzle received in the sleeve member, wherein the sleeve member comprises a multilevel surface for facing and contacting a surface of the steam nozzle assembly when the steam nozzle is received in the sleeve member.

In some embodiments, the sleeve member's multilevel surface slopes from a lowermost level at a first side of the sleeve member to an uppermost level at a second side of the sleeve member opposite the first side. Alternatively, levels of the sleeve member's multilevel surface may include a main level and a protruding level that protrudes relative to the main level.

Alternatively or additionally, the sleeve member may delimit at least one air inlet for admitting air into the sleeve member's interior.

According to a further aspect there is provided a method for axially displacing a sleeve member along a steam nozzle, which steam nozzle is included in a steam nozzle assembly to which the sleeve member is secured via a push-fit connection, at least part of the steam nozzle assembly comprising a first surface and the sleeve member comprising a second surface for facing and contacting the first surface, at least one of the first and second surfaces being a multilevel surface, the method comprising rotating the sleeve member and the at least part of the steam nozzle assembly relative to each other so that levels of the multilevel surface cause axial displacement of the sleeve member along the steam nozzle via contact between the first and second surfaces during said rotation.

In some embodiments, the rotating of the sleeve member and the at least part of the steam nozzle assembly relative to each other causes the push-fit connection to be released.

Alternatively, the rotating of the sleeve member and the at least part of the steam nozzle assembly relative to each other may cause the sleeve member to be axially displaced along the steam nozzle whilst the push-fit connection is maintained.

More generally, embodiments described herein in relation to the kitchen steam delivery assembly may be applicable to the sleeve member and the method, embodiments described herein in relation to the sleeve member may be applicable to the kitchen steam delivery assembly and the method, and embodiments described herein in relation to the method may be applicable to the kitchen steam delivery assembly and the sleeve member.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
FIGs. 1A to 1C schematically depict a kitchen steam delivery assembly according to an example; and
FIGs. 2A to 2C schematically depict a kitchen steam delivery assembly according to another example.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

Provided is a kitchen steam delivery assembly. The kitchen steam delivery assembly comprises a steam nozzle assembly. The steam nozzle assembly includes a steam nozzle that delimits at least one orifice for releasing steam. The kitchen steam delivery assembly also comprises a sleeve member in which the steam nozzle is at least partially receivable. The sleeve member and at least part of the steam nozzle assembly are rotatable relative to each other when the steam nozzle is received in the sleeve member. A push-fit connection secures the steam nozzle assembly and the sleeve member to each other when the steam nozzle is received in the sleeve member. The at least part of the steam nozzle assembly comprises a first surface and the sleeve member comprises a second surface for facing and contacting the first surface when the steam nozzle is received in the sleeve member. At least one of the first and second surfaces is a multilevel surface whose levels define axial displacement of the sleeve member along the steam nozzle via contact between the first and second surfaces during said rotation of the sleeve member and the at least part of the steam nozzle assembly relative to each other. Also provided is a beverage machine comprising the kitchen steam delivery assembly. Further provided is a sleeve member, e.g. a steam wand or panarello, for receiving the steam nozzle of a steam nozzle assembly.

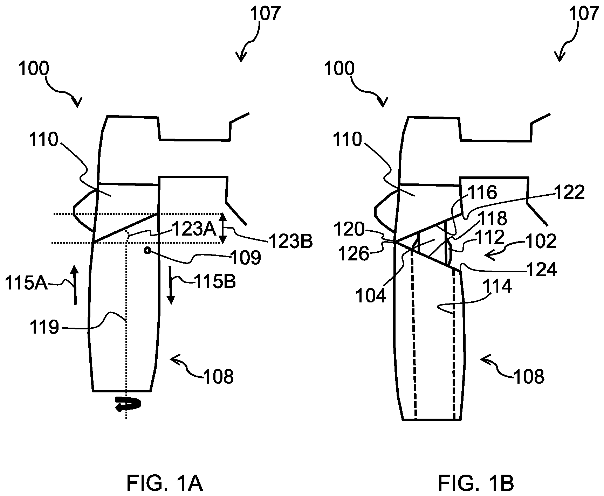

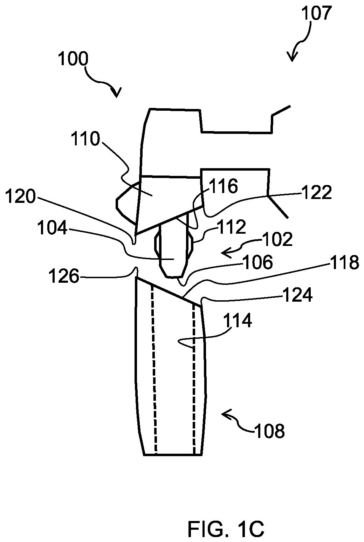

FIGs. 1A to 1C schematically depict a kitchen steam delivery assembly 100 according to an example. Referring to FIGs. 1B and 1C, the kitchen steam delivery assembly 100 comprises a steam nozzle assembly 102. The steam nozzle assembly 102 includes a steam nozzle 104 that has at least one orifice 106 for releasing steam. Such orifice(s) 106 may be located at a tip of the steam nozzle 104.

The steam nozzle 104 may be regarded as a discharge pipe from which steam is jetted or sprayed via the orifice(s) 106.

One or more steam channels defined in the steam nozzle 104 may carry steam along the steam nozzle 104 to the orifice(s) 106, whereupon the steam may exit the steam nozzle 104 via the orifices(s) 106.

The kitchen steam delivery assembly 100 may be used for delivering steam to a liquid, e.g. milk, for the purpose of warming and/or frothing the liquid.

Alternatively or additionally, the kitchen steam delivery assembly 100 may be included in a beverage machine 107, e.g. a coffee machine.

Such a beverage machine 107 may, for example, include, in addition to the kitchen steam delivery assembly 100, a preparation chamber, e.g. a brew chamber, in which water, e.g. hot water, may be combined with a raw material, such as ground coffee.

A non-limiting example of such a beverage machine 107 is a fully automatic coffee machine comprising a coffee grinding stage for grinding coffee, a brew chamber for receiving ground coffee from the coffee grinding stage, and a hot water supply system for delivering hot water to the brew chamber.

In such an example, liquid, e.g. milk, frothed using the kitchen steam delivery assembly 100 may be manually or automatically dispensed to provide a beverage comprising coffee brewed in the brew chamber and liquid frothed using the kitchen steam delivery assembly 100.

In some embodiments, such as shown in FIGs. 1A to 1C, the steam nozzle 104, in other words steam discharge pipe, externally protrudes from the beverage machine 107.

In some embodiments, a steam supply system is included in the kitchen steam delivery assembly 100 or in a beverage machine 107 in which the kitchen steam delivery assembly 100 is included. Such a steam supply system, e.g. comprising a steam generator for vaporizing water supplied thereto, may supply the steam that is carried along the steam nozzle 104 and is released via the steam nozzle's orifice(s) 106.

As shown in each of FIGs. 1A to 1C, the kitchen steam delivery assembly 100 comprises a sleeve member 108 in which the steam nozzle 104 is at least partially receivable.

The sleeve member 108 may assist to protect the steam nozzle 104 from food ingredients, e.g. milk, to which steam is being delivered via the steam delivery assembly 100. Alternatively or additionally, the sleeve member 108 may be configured, when the steam nozzle 104 is received in the sleeve member 108, to provide steam-based treatment of the food ingredients, e.g. milk, that is not providable by the steam nozzle 104 without the sleeve member 108. The sleeve member 108 may for instance include a Venturi restriction. Steam delivered by the steam nozzle 104 may pass through this restriction. This will generate an under pressure directly downstream of the restriction. This under pressure may be used to suction in a fluid, e.g. a liquid such as milk and/or a gas such as air.

In some embodiments, and referring to FIG. 1A, the sleeve member 108 delimits at least one air inlet 109 for admitting air into the sleeve member's interior so that the air is combinable with steam released via the steam nozzle's orifice(s) 106. The air inlet(s) 109 may, for example, assist frothing of a liquid, e.g. milk.

The air inlet(s) 109 may each be dimensioned to be sufficiently small, e.g. less than 2 mm in diameter, to control infusion of air into the steam. This may, for instance, assist to control the characteristics of liquid, e.g. milk, frothed using the kitchen steam delivery assembly 100.

It is noted that in embodiments in which the sleeve member 108 delimits the air inlet(s) 109, the sleeve member 108 may be a panarello.

The sleeve member 108 may be formed from any suitable material. In some embodiments, the sleeve member 108 is formed from a metallic material, e.g. stainless steel, and/or a polymeric material.

The term "polymeric material" as used herein is intended to encompass plastic and elastomeric materials. Particular mention is made of silicone rubber as a polymeric and elastomeric material for inclusion in the sleeve member 108.

Silicone rubber benefits from being durable and thermally robust, and thus has properties that render it particularly suitable for inclusion, for example together with a metallic material, e.g. stainless steel, in the sleeve member 108.

It is noted at this point that the steam nozzle assembly 102 can similarly be formed from any suitable material, such as a metallic material, e.g. stainless steel, and/or a polymeric material. Particular mention is made of silicone rubber as a polymeric and elastomeric material for inclusion in the steam nozzle assembly 102.

In some embodiments, the steam nozzle 104 is formed from a metallic material, e.g. stainless steel. Alternatively or additionally, the steam nozzle 104 may extend from a polymeric base part 110. A non-limiting example of the latter is shown in FIGs. 1A to 1C.

More generally, the kitchen steam delivery assembly 100 comprises a push-fit connection 112, 114 for securing the steam nozzle assembly 102 and the sleeve member 108 to each other when the steam nozzle 104 is received in the sleeve member 108. Such a push-fit connection 112, 114 may facilitate attachment of the sleeve member 108 and the steam nozzle assembly 102 to each other since the sleeve member 108 may be simply pushed onto the steam nozzle assembly 102, with the steam nozzle 104 being received in the sleeve member 108.

The push-fit connection 112, 114 may be arranged to secure the steam nozzle assembly 102 and the sleeve member 108 to each other when the sleeve member 108 is pushed sufficiently far along the steam nozzle 104 for the push-fit connection 112, 114 to be established, e.g. as a consequence of the push-fit portion 112 of steam nozzle assembly 102 and the push-fit portion 114 of sleeve member 108 engaging each other.

The push-fit connection 112, 114 can have any suitable design. In some embodiments, such as shown in FIGs. 1A to 1C, an interior surface of the sleeve member 108 provides a sleeve member push-fit portion 114 that engages with a steam nozzle assembly push-fit portion 112 arranged along at least part of an exterior of the steam nozzle 104.

In such embodiments, the steam nozzle assembly push-fit portion 112 may, for instance, protrude relative to a main exterior surface of the steam nozzle 104.

The steam nozzle assembly push-fit portion 112 may be formed from a metallic material, e.g. stainless steel, and/or may be formed from a polymeric, e.g. elastomeric, material. For example, the steam nozzle assembly push-fit portion 112 may comprise one or more elastomeric, e.g. silicone, gaskets mounted on the steam nozzle 104 that are contacted by the sleeve member push-fit portion 114, e.g. the sleeve member's 108 interior surface, when the sleeve member 108 has been advanced sufficiently far along the steam nozzle 104.

Whilst the push-fit connection 112, 114 provides a relatively straightforward and intuitive way of securing the steam nozzle assembly 102 and the sleeve member 108 to each other via pushing the sleeve member 108 in a first axial direction 115A along the steam nozzle 104, challenges have nonetheless been encountered relating to pulling the sleeve member 108 in a second axial direction 115B opposite the first axial direction 115A.

The push-fit connection 112, 114 may be required to exert a suitable force for maintaining attachment of the sleeve member 108 and the steam nozzle assembly 102 during use of the kitchen steam delivery assembly 100.

In some embodiments, for example in the case of a sleeve member in the form of a steam wand or panarello, the push-fit connection 112, 114 may be configured so that at least 20 N of force is required for axially pulling the sleeve member 108 along the steam nozzle 104 in the second axial direction 115B to release the sleeve member 108 from the steam nozzle assembly 102.

This may make it difficult for the user to pull the sleeve member 108 in the second axial direction 115B when they wish to release the sleeve member 108 from the steam nozzle assembly 102, e.g. for cleaning, or adjusting how far along the steam nozzle 104 the sleeve member 108 is arranged.

For example, a greater force required to pull the sleeve member 108 in the second axial direction 115B may increase the risk of the sleeve member 108 and/or the user's hand being thrust into an object, such as a drip tray (not visible), situated beneath the steam nozzle assembly 102 at the moment the push-fit connection 112, 114 releases the sleeve member 108 from the steam nozzle assembly 102.

Accordingly, and as best shown in FIGs. 1B and 1C, the sleeve member 108 and at least part 110 of the steam nozzle assembly 102 are rotatable relative to each other, with the at least part 110 of the steam nozzle assembly 102 comprising a first surface 116 for facing and contacting a second surface 118 of the sleeve member 108 when the steam nozzle 104 is received in the sleeve member 108. At least one of the first and second surfaces 116, 118 is a multilevel surface whose levels define axial displacement of the sleeve member 108 along the steam nozzle 104 via contact between the first and second surfaces 116, 118 during the rotation of the sleeve member 108 and the at least part 110 of the steam nozzle assembly 102 relative to each other.

Rotating the sleeve member 108 and the at least part 110 of the steam nozzle assembly 102 relative to each other and allowing the sleeve member 108 to be moved via the multilevel surface along the steam nozzle 104 in the second axial direction 115B may represent an easier and more controlled way of moving the sleeve member 108 along the steam nozzle 104 in the second axial direction 115B. The above-mentioned risk of thrusting the sleeve member 108, e.g. steam wand or panarello, into an object situated beneath the steam nozzle assembly 102 may be lessened or removed.

A rotary motion can create a resultant axial, here: vertical force far exceeding the force, e.g. 20 N, that maintains attachment of the sleeve member 108 to the steam nozzle assembly 102, with relatively little effort from the user.

This rotation may be considered more natural than a translatory motion, here: vertical motion, e.g. due to being perceived as a smaller motion with a more defined beginning and end. The rotary motion may be implemented from the user's wrist and may require only one hand. For example, two of the user's digits, e.g. an index finger and a thumb, may enable the sleeve member 108 to be detached from the steam nozzle assembly 102.

It is noted that use of only two of the user's digits to detach the sleeve member 108 from the steam nozzle assembly 102 may not be possible when such detachment is only possible via pulling of the sleeve member 108 in the second axial direction 115B, e.g. against the above-mentioned force of at least 20 N.

The steam nozzle assembly 102 may comprise a moveable element that is moveable relative to a remainder of the steam nozzle assembly 102 to urge displacement of the sleeve member 108 along the steam nozzle 104 in the second axial direction 115B. The moveable element may, for example, be included in the at least part 110 of the steam nozzle assembly 102 that includes the first surface 116.

For example, part 110 of the steam nozzle assembly 102 may be moved, e.g. rotated, thereby pushing the non-rotating sleeve member 108 in the second axial direction 115B, e.g. to detach the sleeve member 108 from the steam nozzle assembly 102. A sliding knob may, for instance, be included to assist with pushing of the sleeve member 108 from the steam nozzle assembly 102.

In alternative embodiments, the relative rotation may be via rotation of the sleeve member 108, e.g. about a longitudinal axis 119 extending lengthways through the sleeve member 108, while the steam nozzle assembly 102 remains static.

Such alternative embodiments may be preferred over the moveable part 110/moveable element-comprising embodiments because fewer components may be required and less modification may be needed to, for instance, conventional kitchen steam delivery assemblies whose first and second surfaces 116, 118 are not multilevel surfaces.

The multilevel surface may allow pushing the sleeve member 108 onto the steam nozzle assembly 102 so that the sleeve member 108 is push-fitted to the steam nozzle assembly 102 via the push-fit connection 112, 114.

Specific rotation of the sleeve member 108 may be required (to some extent) in order for the second surface 118 of the sleeve member 108 to be fully seated against the first surface 116 of the steam nozzle assembly 102.

In other words, it remains possible to push the sleeve member 108, e.g. steam wand or panarello, onto the steam nozzle assembly 102, though with limitation in terms of rotary orientation.

Whilst the multilevel surface may enable twist-to-release-type detachment of the sleeve member 108, as previously described, the sleeve member 108 can still be detached by pulling in the second axial direction 115B, e.g. downwardly.

It is also noted that removing the requirement for axial, here: vertical pulling of the sleeve member 108 in the second axial direction 115B may mean that hitherto unavailable options for (vertical) positioning of components within the kitchen steam delivery assembly 100 and/or the beverage machine 107 may become available. For instance, it may become possible to situate one or more components at a relatively short distance below the kitchen steam delivery assembly. This distance merely needs to be sufficient to allow removal of the sleeve member 108 through rotary motion. Such distance can be much smaller than what would be needed for a conventional pulling motion, where sufficient distance is needed to allow a user to decelerate and ultimately stop the pulling motion.

The first surface 116 may be included, for example, in a static part 110 that remains on the beverage machine 107, and/or the second surface 118 may be included in a part of the sleeve member 108, e.g. an elastomeric part of the sleeve member 108 that may be detachable from a remainder of the sleeve member 108.

The above-mentioned at least 20 N fixation provided by the push-fit connection 112, 114 may be provided, for example, by push-fit of the elastomeric part of the sleeve member 108 onto the steam nozzle assembly 102, e.g. corresponding to a static part of the beverage machine 107.

The levels of the multilevel surface can be arranged in any suitable manner provided that the levels cause axial displacement of the sleeve member 108 along the steam nozzle 104 via contact between the first and second surfaces 116, 118 during the rotation of the sleeve member 108 and the at least part 110 of the steam nozzle assembly 102 relative to each other.

In some embodiments, and referring to FIGs. 1B and 1C, the first surface 116 of the steam nozzle assembly 102 is a multilevel surface that slopes from a lowermost level 120 at a first side of the steam nozzle assembly 102 to an uppermost level 122 at a second side of the steam nozzle assembly 102 opposite the first side. Such a multilevel surface may be regarded as a diagonal line. Such a diagonal line may mean that twisting of the sleeve member 108 about the longitudinal axis 119 causes displacement, and thus separation, of the sleeve member in the second axial direction 115B.

The angle 123A of the sloping multilevel surface, in other words the diagonal twisting line, may be selected to optimize force versus speed of removal, thereby optimizing usability. This angle 123A can be regarded as being a push-off angle 123A.

The push-off length 123B provided by the multilevel surface, in other words the axial displacement provided during the rotation of the sleeve member 108 and the at least part 110 of the steam nozzle assembly 102 relative to each other, is also shown in FIG. 1A.

The second surface 118 of the sleeve member 108 may be a multilevel surface that slopes from a lowermost level 124 at a first side of the sleeve member 108 to an uppermost level 126 at a second side of the sleeve member 108 opposite the first side.

In some embodiments, the sleeve member 108 and the at least part 110 of the steam nozzle assembly 102 are rotatable relative to each other to enable axial displacement of the sleeve member 108 between an upper position, as shown in FIG. 1A, in which the uppermost level 126 of the sleeve member 108 contacts the uppermost level 122 of part 110 of the steam nozzle 102 and a lower position, as shown in FIG. 1B, in which the uppermost level 126 of the sleeve member 108 contacts the lowermost level 120 of the part 110 of the steam nozzle assembly 102.

A left hand or right hand version of the kitchen steam delivery assembly 100 may be provided by, for example, the diagonal line of the multilevel surface not being symmetrical when the kitchen steam delivery assembly 102 is viewed from the front.

This may limit removal of the sleeve member 108 to a rotation, in other words twist, to the left or a rotation to the right. In some embodiments, an additional function may be introduced to rotation in the opposite direction to the direction that causes displacement of the sleeve member 108 in the second axial direction 115B.

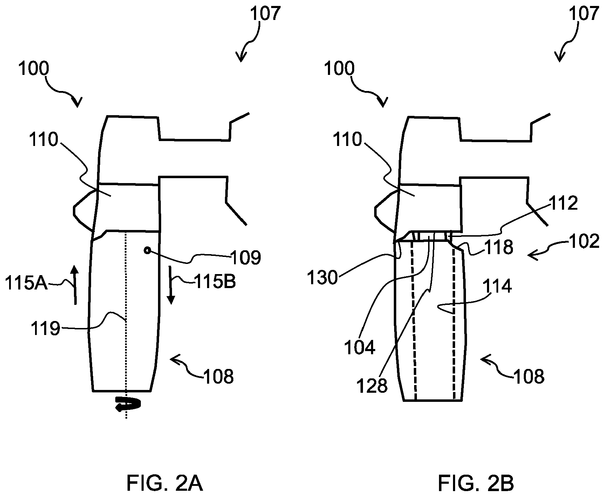

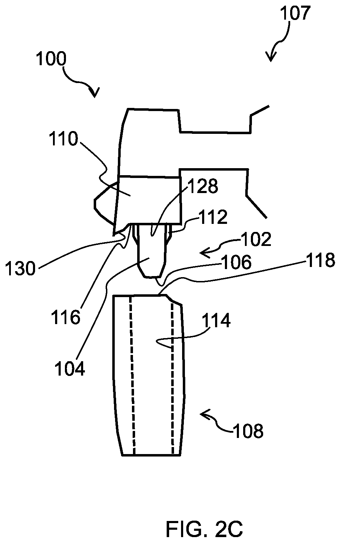

In some embodiments, such as shown in FIGs. 2A to 2C, the levels of the, e.g. each, multilevel surface comprise a main level 128 and a protruding level 130 that protrudes relative to the main level 128. This may provide, for example, a push-off geometry in which the protruding level 130 protrudes far enough from the main level 128 to cause an axial displacement of the sleeve member 108 that releases the sleeve member 108 from the steam nozzle assembly 102. In other words, the multilevel surface may be implemented via a piece of geometry at only a specific part of the rotation that pushes the sleeve member 108, e.g. an elastomeric part of the sleeve member 108 that includes the second surface 118, along the steam nozzle 104 in the second axial direction 115B.

In more general terms, the push-fit connection 112, 114 may be releasable in response to a threshold extent of rotation of the sleeve member 108 and the at least part 110 of the steam nozzle assembly 102 relative to each other and/or a threshold axial displacement of the sleeve member 108 along the steam nozzle 104 being reached. Thus, the push-fit connection 112, 114 and the multilevel surface(s) may create a "removal point" at which the sleeve member 108 is detached from the steam nozzle assembly 102.

Such a removal point may be at any arbitrary extent of rotation, for example at 45 degrees, 90 degrees, etc. of rotation, e.g. about the longitudinal axis 119.

In some embodiments, a degree of play may be provided to the removal point, such that the sleeve member 108 and the at least part 110 of the steam nozzle assembly 102 are rotatable relative to each other without there being any effect on the axial positioning of the sleeve member 108 relative to the steam nozzle assembly 102.

In some embodiments, the push-fit connection 112, 114 is configured to maintain a force for securing the steam nozzle assembly 102 and the sleeve member 108 to each other during at least a portion of the displacement of the sleeve member 108 along the steam nozzle 104 in the second axial direction 115B. Thus, the multilevel surface may be employed to adjust height of the sleeve member 108, e.g. panarello.

In some embodiments, the levels of the multilevel surface(s) are arranged so that extents of the rotation of the sleeve member 108 and the at least part 110 of the steam nozzle assembly 102 relative to each other define indexed axial displacements of the sleeve member 108 along the steam nozzle 102 in the second axial direction 115B.

In such embodiments, the height adjustment may push the sleeve member 108 along the steam nozzle 104 in the second axial direction 115B but with the push-fit connection 112, 114 maintaining attachment of the sleeve member 108 to the nozzle assembly 102, e.g. maintaining the 20 N fixation provided by push-fitting the sleeve member 108 onto the static steam nozzle assembly 102.

For example, a 45 degrees rotation may displace the sleeve member 108 to a first distance along the steam nozzle 104, a 90 degrees rotation may displace the sleeve member 108 to a second distance along the steam nozzle 104 that is greater than the first distance, and a 135 degrees rotation may displace the sleeve member 108 to a third distance along the steam nozzle 104 that is greater than the second distance.

In such an example, a 180 degrees rotation may, for instance, correspond to the removal point at which the sleeve member 108 is detached from the steam nozzle assembly 102.

It is noted at this point that whilst only one of the first and second surfaces 116, 118 may provide the multilevel surface that assists displacement of the sleeve member 108 along the steam nozzle 104 in the second axial direction 115B, preferably the first surface 116 is a first multilevel surface and the second surface 118 is a second multilevel surface. Preferably, the shape of the second multilevel surface 118 complements that of the first multilevel surface 116.

Such complementarily shaped multilevel surfaces may avoid the levels causing gaps to be provided between the first and second surfaces 116, 118 when the sleeve member 108 is maximally advanced in the first axial direction 115A along the steam nozzle 104. Non-limiting examples of complementary multilevel surfaces cooperating with each other to ensure that no such gaps are present are shown in FIGs. 1A and 2A.

Whilst the embodiments described herein and depicted in the Figures generally relate to application of the multilevel surface concept, e.g. diagonal line, to a sleeve member 108 in the form of a steam wand or a panarello, the same principle can be applied to other types of sleeve member 108 that are attached in a similar fashion to the steam nozzle assembly 102.

In this regard, the present disclosure further relates to the sleeve member 108 per se. Such a sleeve member 108 may be suitable for receiving a steam nozzle 104 of a kitchen steam nozzle assembly 102, with the sleeve member 108 having a push-fit portion 114 for enabling the sleeve member 108 to be push-fitted to the steam nozzle assembly 102 when the steam nozzle 104 is received in the sleeve member 108.

The sleeve member 108 is rotatable relative to the steam nozzle 104 received in the sleeve member 108.

The sleeve member 108 comprises a multilevel surface 118 for facing and contacting a surface 116 of the steam nozzle assembly 102 when the steam nozzle 104 is received in the sleeve member 108.

In some embodiments, and referring again to FIGs. 1B and 1C, the sleeve member's 108 multilevel surface 118 slopes from a lowermost level 124 at a first side of the sleeve member 108 to an uppermost level 126 at a second side of the sleeve member 108 opposite the first side. Alternatively, levels of the sleeve member's 108 multilevel surface 118 may include a main level 128 and a protruding level 130 that protrudes relative to the main level 128.

Alternatively or additionally, the sleeve member 108 may delimit at least one air inlet 109 for admitting air into the sleeve member's 108 interior.

The present disclosure further provides a method for axially displacing a sleeve member 108 along a kitchen steam nozzle 104, which steam nozzle 104 is included in a steam nozzle assembly 102 to which the sleeve member 108 is secured via a push-fit connection 112, 114, with at least part 110 of the steam nozzle assembly 102 comprising a first surface 116 and the sleeve member 108 comprising a second surface 118 for facing and contacting the first surface 116.

At least one of the first and second surfaces 116, 118 is a multilevel surface, and the method comprises rotating the sleeve member 108 and the at least part 110 of the steam nozzle assembly 102 relative to each other so that levels of the multilevel surface cause axial displacement of the sleeve member 108 along the steam nozzle 104 via contact between the first and second surfaces 116, 118 during said rotation.

In some embodiments, the rotating of the sleeve member 108 and the at least part 110 of the steam nozzle assembly 102 relative to each other causes the push-fit connection 112, 114 to be released. Alternatively, the rotating of the sleeve member 108 and the at least part 110 of the steam nozzle assembly 102 relative to each other may cause the sleeve member 108 to be axially displaced along the steam nozzle 104 whilst the push-fit connection 112, 114 is maintained.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

The mere fact that certain measures are recited in mutually different dependent claims does not indicate that a combination of these measures cannot be used to advantage.

If the term "adapted to" is used in the claims or description, it is noted the term "adapted to" is intended to be equivalent to the term "configured to".

Any reference signs in the claims should not be construed as limiting the scope.

## Claims

1. A kitchen steam delivery assembly (100) comprising:
a steam nozzle assembly (102) comprising a steam nozzle (104) that has at least one orifice (106) for releasing steam;
a sleeve member (108) in which the steam nozzle is at least partially receivable, the sleeve member and at least part (110) of the steam nozzle assembly being rotatable relative to each other when the steam nozzle is received in the sleeve member;
a push-fit connection (112, 114) for securing the steam nozzle assembly and the sleeve member to each other when the steam nozzle is received in the sleeve member, wherein:
the at least part of the steam nozzle assembly comprises a first surface (116) and the sleeve member comprises a second surface (118) for facing and contacting the first surface when the steam nozzle is received in the sleeve member, and
at least one of the first and second surfaces is a multilevel surface whose levels define axial displacement of the sleeve member along the steam nozzle via contact between the first and second surfaces during said rotation of the sleeve member and the at least part of the steam nozzle assembly relative to each other.

2. The kitchen steam delivery assembly (100) according to claim 1, wherein the push-fit connection (112, 114) is releasable in response to a threshold extent of rotation of the sleeve member (108) and the at least part (110) of the steam nozzle assembly (102) relative to each other and/or a threshold axial displacement of the sleeve member along the steam nozzle (104) being reached.

3. The kitchen steam delivery assembly (100) according to claim 1 or claim 2, wherein the push-fit connection (112, 114) is configured to maintain a force for securing the steam nozzle assembly (102) and the sleeve member (108) to each other during at least a portion of said axial displacement of the sleeve member along the steam nozzle (104).

4. The kitchen steam delivery assembly (100) according to any one of claims 1 to 3, wherein said levels are arranged so that extents of the rotation of the sleeve member (108) and the at least part (110) of the steam nozzle assembly (102) relative to each other define indexed axial displacements of the sleeve member along the steam nozzle (104).

5. The kitchen steam delivery assembly (100) according to any one of claims 1 to 4, wherein the steam nozzle assembly (102) comprises a moveable element that is moveable relative to a remainder of the steam nozzle assembly to urge axial displacement of the sleeve member (108) along the steam nozzle (104).

6. The kitchen steam delivery assembly (100) according to claim 5, wherein the moveable element is included in said at least part (110) of the steam nozzle assembly (102) that includes the first surface (116).

7. The kitchen steam delivery assembly (100) according to any one of claims 1 to 6, wherein the first surface (116) is a multilevel surface that slopes from a lowermost level (120) at a first side of the steam nozzle assembly (102) to an uppermost level (122) at a second side of the steam nozzle assembly opposite the first side.

8. The kitchen steam delivery assembly (100) according to any one of claims 1 to 7, wherein the second surface (118) is a multilevel surface that slopes from a lowermost level (124) at a first side of the sleeve member (108) to an uppermost level (126) at a second side of the sleeve member opposite the first side.

9. The kitchen steam delivery assembly (100) according to any one of claims 1 to 6, wherein the levels comprise a main level (128) and a protruding level (130) that protrudes relative to the main level.

10. The kitchen steam delivery assembly (100) according to any one of claims 1 to 9, wherein the first surface (116) is a first multilevel surface and the second surface (118) is a second multilevel surface, preferably whose shape complements that of the first multilevel surface.

11. The kitchen steam delivery assembly (100) according to any one of claims 1 to 10, wherein the push-fit connection (112, 114) is configured so that at least 20 N of force is required for axially pulling the sleeve member (108) along the steam nozzle (104) to release the sleeve member from the steam nozzle assembly (102).

12. The kitchen steam delivery assembly (100) according to any one of claims 1 to 11, wherein the sleeve member (108) delimits at least one air inlet (109) for admitting air into the sleeve member's interior so that said air is combinable with said steam released via the at least one orifice (106).

13. The kitchen steam delivery assembly (100) according to any one of claims 1 to 12, comprising a steam supply system for supplying steam to the steam nozzle (104).

14. A beverage machine (107) comprising the kitchen steam delivery assembly (100) according to any one of claims 1 to 13; optionally wherein the beverage machine comprises a coffee brewing apparatus.

15. A sleeve member (108) for receiving a steam nozzle (104) of a kitchen steam nozzle assembly (102), the sleeve member having a push-fit portion (114) for enabling the sleeve member to be push-fitted to the steam nozzle assembly when the steam nozzle is received in the sleeve member, the sleeve member being rotatable relative to the steam nozzle received in the sleeve member, wherein the sleeve member comprises a multilevel surface (118) for facing and contacting a surface (116) of the steam nozzle assembly when the steam nozzle is received in the sleeve member.
